# EUROPÄISCHE PATENTSCHRIFT

(11) **EP 1 311 785 B1**
(45) Veröffentlichungstag und Bekanntmachung des Hinweises auf die Patenterteilung: **30.06.2004**
(21) Anmeldenummer: 01962624.1
(22) Anmeldetag: 17.08.2001
(51) Int. Cl.: F17C 3/08, F17C 13/00

(54) **KRYOSTAT FÜR ELEKTRISCHE APPARATE WIE SUPRALEITENDE STROMBEGRENZER UND ELEKTRISCHE MASCHINEN WIE TRANSFORMATOREN, MOTOREN, GENERATOREN UND ELEKTRISCHE MAGNETE MIT SUPRALEITENDER WICKLUNG**
CRYOSTAT FOR ELECTRICAL DEVICES SUCH AS SUPERCONDUCTING CURRENT LIMITERS AND ELECTRICAL MACHINES SUCH AS TRANSFORMERS, MOTORS, GENERATORS AND ELECTRICAL MAGNETS WITH A SUPERCONDUCTING WINDING
CRYOSTAT DESTINE A DES APPAREILS ELECTRIQUES TELS QUE DES LIMITEURS DE COURANT SUPRACONDUCTEURS, ET A DES MACHINES ELECTRIQUES TELLES QUE DES TRANSFORMATEURS, MOTEURS, GENERATEURS ET AIMANTS ELECTRIQUES A ENROULEMENT SUPRACONDUCTEUR

(30) Priorität: 17.08.2000 DE 10040231
(43) Veröffentlichungstag der Anmeldung: 21.05.2003
(73) Patentinhaber: SIEMENS AKTIENGESELLSCHAFT, 80333 München (DE)
(72) Erfinder: AHLF, Gerd, 91369 Wiesenthau (DE); WACKER, Bernd, 91074 Herzogenaurach (DE)
(86) Internationale Anmeldenummer: PCT/DE2001/003055
(87) Internationale Veröffentlichungsnummer: WO 2002/014736

(56) Entgegenhaltungen:
- EP-A- 0 015 728
- EP-A- 1 089 031
- US-A- 4 510 771
- US-A- 5 889 456
- PATENT ABSTRACTS OF JAPAN vol. 2000, no. 15, 6. April 2001 (2001-04-06) & JP 2000 340420 A (MITSUBISHI ELECTRIC CORP;KANSAI ELECTRIC POWER CO INC:THE), 8. Dezember 2000 (2000-12-08)
- PATENT ABSTRACTS OF JAPAN vol. 1997, no. 03, 31. März 1997 (1997-03-31) & JP 08 306971 A (FURUKAWA ELECTRIC CO LTD:THE;CHUBU ELECTRIC POWER CO INC), 22. November 1996 (1996-11-22)
- PATENT ABSTRACTS OF JAPAN vol. 1995, no. 09, 31. Oktober 1995 (1995-10-31) & JP 07 142234 A (HITACHI LTD), 2. Juni 1995 (1995-06-02)

## Beschreibung

Kryostat für elektrische Apparate wie supraleitende Strombegrenzer und elektrische Maschinen wie Transformatoren, Motoren, Generatoren und elektrische Magnete mit supraleitender Wicklung, beispielsweise gemäß Dokument EP-A-0 015 728.

Die Erfindung bezieht sich auf einen Kryostaten für elektrische Apparate wie supraleitende Strombegrenzer und elektrische Maschinen wie Transformatoren, Motoren, Generatoren und elektrische Magnete mit supraleitender Wicklung, in dessen Innenraum ein Kältemittel mit niedriger, insbesondere kryogener Temperatur, z.B. von 77K, ein Kryobad für supraleitende Strombegrenzer und/oder supraleitende Wicklungen ausbildet und der Stromdurchführungen aufweist, mittels denen Strom von einem Niveau hoher Temperatur, z.B. Raumtemperatur, auf ein Niveau niedriger, insbesondere kryogener Temperatur, z.B. 77K, und umgekehrt leitbar ist.

Die Stromdurchführungen eines derartigen Kryostaten sind üblicherweise aus einem metallischen Werkstoff hergestellt. Metallische Werkstoffe haben üblicherweise sowohl eine gute elektrische als auch eine gute thermische Leitfähigkeit. Im Gegensatz zu der guten elektrischen Leitfähigkeit ist die gute thermische Leitfähigkeit beim Einsatz für Stromdurchführungen höchst unerwünscht, da eine hohe thermische Leitfähigkeit den Wärmeeintrag in den Innenraum des Kryostaten zur Folge hat. Darüber hinaus wird in den Stromdurchführungen bei Stromfluß weitere Wärme wegen der endlichen elektrischen Leitfähigkeit des in der Stromdurchführung vorhandenen elektrischen Leiters und der damit verbundenen ohmschen Wärme erzeugt.

Aus den vorstehend erwähnten Gründen sind die Stromdurchführungen die Hauptverursacher von Wärmeeinträgen in Kryostaten. Die derart in den Kryostat eingebrachten Verluste müssen mit einer Kälteerzeugungsanlage kompensiert werden, um die Funktionsfähigkeit des Kryostaten langfristig aufrecht zu erhalten. Derartige Refrigeratoren bzw. Kälteerzeugungsanlagen arbeiten physikalisch bedingt mit einem schlechten Carnot-Wirkungsgrad COP; dieser Carnot-Wirkungsgrad COP beträgt bei Refrigeratoren bzw. Kälteerzeugungsanlagen im für das technische Gebiet der vorliegenden Erfindung interessanten Kälteleistungsbedarf von ca. 100W bis 1000W Kälteleistung zwischen 5 und 20 %. Für jedes Watt Kälteleistung müssen daher u.U. beispielsweise 20 Watt elektrische Leistung aufgewendet werden.

Der Erfindung liegt die Aufgabe zugrunde, den eingangs geschilderten Kryostaten derart weiterzubilden, daß der Wärmeeintrag in den Innenraum des Kryostaten reduziert wird, so daß Kälteerzeugungsanlagen bzw. Refrigeratoren mit geringerer Leistung verwendet werden können.

Diese Aufgabe wird erfindungsgemäß dadurch gelöst, daß einer, vorzugsweise jeder Stromdurchführung des Kryostaten eine Wärmetauschvorrichtung zugeordnet ist, mittels der der Eintrag von Wärmeenergie aus der Umgebung in den Innenraum des Kryostaten über die jeweilige Stromdurchführung reduzierbar ist. Mittels jeweils einer Wärmetauschvorrichtung je Stromdurchführung kann der Wärmeeintrag in das Kryobad des Kryostaten, das beispielsweise durch flüssigen Stickstoff mit einer Temperatur von-77K bei einem Druck von 1 bar gebildet wird, so stark reduziert werden, daß der Refrigerator bzw. die Kälteerzeugungsanlage erheblich kleiner dimensioniert werden kann. Der erforderliche elektrische Leistungsbedarf wie auch der Kühlwasserbedarf zur Kühlung des Refrigerators bzw. der Kälteerzeugungsanlage werden erheblich reduziert.

Vorteilhaft weist jede Wärmetauschvorrichtung eine Rohrwendel auf, die an der Stromdurchführung an deren in den Innenraum des Kryostaten vorstehendem Abschnitt angeordnet ist, der sich zwischen einem Spiegel des Kryostatbades und einer Isolierschicht bzw. einem Kryostatdeckel befindet, wobei zweckmäßigerweise die Rohrwendel den in den Kryostaten vorstehenden Abschnitt der Stromdurchführung in dessen Umfangsrichtung in unmittelbarer Anlage umgibt, so daß ein guter thermischer Kontakt mit einem Leiter der Stromdurchführung hergestellt wird.

Da das für die Rohrwendel der Wärmetauschvorrichtung zur Verfügung stehende Kühlmittel üblicherweise eine Temperatur aufweist, die über dem Siedepunkt des das Kryobad bildenden flüssigen Stickstoffs liegt, erstreckt sich die Rohrwendel jeder Wärmetauschvorrichtung am in den Innenraum des Kryostaten vorstehenden Abschnitt der Stromdurchführung von der Innenseite des Kryostatdeckels des Kryostaten bzw. von der Unterseite der Isolierschicht bis kurz oberhalb des Spiegels des Kryobades. Hierdurch wird der für die Anordnung der Rohrwendel zur Verfügung stehende Raum optimal ausgenutzt, wobei jedoch vermieden ist, daß die Rohrwendel in unmittelbaren Kontakt mit dem Kryobad kommt.

Eine mechanisch-konstruktiv einfache Ausgestaltung der Rohrwendel bzw. ihres Kühlmittelzulaufs ist erreichbar, wenn letzterer zum dem Kryobad zugewandten Ende der Rohrwendel oberhalb des Spiegels des Kryobades seitlich in den Kryostaten oder durch den Kryostatdeckel in den Kryostaten hineingeführt ist.

Alternativ kann der Kühlmittelzulauf der Rohrwendel zum dem Kryobad zugewandten Ende der Rohrwendel durch die Stromdurchführung geführt werden.

Der Kühlmittelablauf der Rohrwendel ist zweckmäßigerweise vom dem Kryobad abgewandten Ende der Rohrwendel durch die Stromdurchführung nach außen geführt.

Der für die Rohrwendel benötigte Flüssigsauerstoff wird praktisch nur durch die Rohrwendel hindurch geleitet, wobei kein direkter Kontakt zwischen dem Sauerstoff und der Apparatur des Kryostaten besteht. Mechanische Schnittstellen sind auf das Geringfügigste reduziert; in der kryogenen Apparatur des Kryostats wird kein Sauerstoff verbraucht.

Als Kühlmittel für die Rohrwendel der Wärmetauschvorrichtung kann zweckmäßigerweise Flüssigsauerstoff, Flüssigwasserstoff oder Flüssigerdgas eingesetzt werden.

Die Anwendung von Flüssigsauerstoff ist besonders an Bord von Unterwasserschiffen zweckmäßig, da dort üblicherweise zum Betrieb von Brennstoffzellenanlagen Flüssigsauerstofftanks ohnehin vorhanden sind. In den in Flüssigsauerstofftanks, die als Isolierbehälter in Form von Isoliertanks oder Dewars üblicherweise ausgebildet sind, gelagerten Flüssigsauerstoff wurde bereits vor dessen Verbringung an Bord des Unterwasserschiffes Energie zur Verflüssigung aufgewendet. Wird diese Energie nun zur Entwärmung an anderer Stelle, nämlich an den Stromdurchführungen des Kryostaten, genutzt, so kann die zum Kryostaten gehörige Kälteerzeugungsanlage bzw. der zum Kryostaten gehörige Refrigerator kleiner ausgelegt werden. Hierdurch können als Kälteerzeugungsanlagen bzw. Refrigeratoren für den Kryostaten marktübliche Geräte mit Kälteleistungen eingesetzt werden, die geringer als 100W bei einer kryogenen Temperatur von 77K betragen.

Vorteilhaft bildet der als Kühlmittel für die Rohrwendel der Wärmetauschvorrichtung eingesetzte Flüssigsauerstoff einen Sauerstoffteilstrom des der Brennstoffzellenanlage des Unterwasserschiffs verdampft und vorgewärmt zuzuführenden Sauerstoffs.

Der die Rohrwendel der Wärmetauschvorrichtung verlassende gasförmige Sauerstoff kann zweckmäßigerweise mittels eines Gaskompressors der Brennstoffzellenanlage des Unterwasserschiffs angesaugt werden.

Um die Temperatur der externen an die Stromdurchführung angeschlossenen Sammelschiene bzw. Leitung von bis zu 80 °C bei Vollast zu verringern und bei Leerlauf - kein Strom - höchstens so zu erwärmen, daß keine Kondensation mit Vereisung auftritt, ist bei einer vorteilhaften Ausführungsform des erfindungsgemäßen Kryostaten am außerhalb des Kryostaten angeordneten Abschnitt der Stromdurchführung ein weiterer Wärmetauscher vorgesehen.

Der außerhalb des Kryostaten angeordnete Wärmetauscher ist zweckmäßigerweise als Wasserwärmetauscher bzw. Wasserkühler ausgebildet.

Alternativ kann der außerhalb des Kryostaten angeordnete Wärmetauscher auch als Wärmetauscher mit einer kryogenen Flüssigkeit ausgebildet sein, wobei er dann den innerhalb des Kryostaten angeordneten Wärmetauscher teilweise oder vollständig ersetzen kann. Bei dieser Ausführungsform sind jedoch besondere Maßnahmen gegen Vereisung zu treffen.

Zumindest zwei oder vorzugsweise sämtliche Stromdurchführungen können innerhalb und/oder außerhalb des Kryostaten von einer ihnen gemeinsamen Wärmetauschvorrichtung bzw. einem ihnen gemeinsamen Wärmetauscher umfaßt sein.

Im folgenden wird die Erfindung anhand von Ausführungsformen unter Bezugnahme auf die Zeichnungen näher erläutert.

Es zeigen:
- FIGUR 1: eine Prinzipdarstellung eines mit einem erfindungsgemäßen Kryostaten ausgerüsteten Strombegrenzers;
- FIGUR 2: in Prinzipdarstellung eine erste Ausführungsform einer Wärmetauschvorrichtung einer Stromdurchführung des erfindungsgemäßen Kryostaten;
- FIGUR 3: ein Prinzipdarstellung einer zweiten Ausführungsform der Wärmetauschvorrichtung der Stromdurchführung des erfindungsgemäßen Kryostaten; und
- FIGUR 4: eine Prinzipdarstellung einer dritten Ausführungsform der Wärmetauschvorrichtung der Stromdurchführung des erfindungsgemäßen Kryostaten.

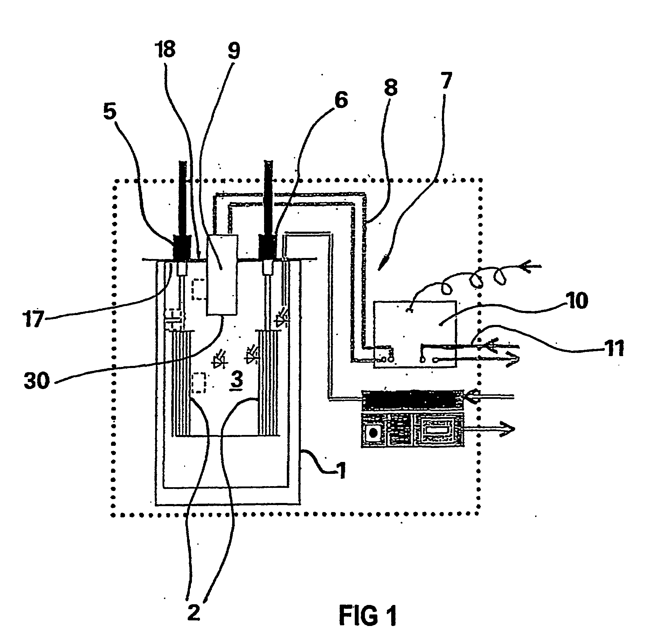

Ein anhand der FIGUREN 1 bis 4 näher dargestellter erfindungsgemäßer Kryostat 1 ist bei der in FIGUR 1 dargestellten Ausführungsform einem supraleitenden Strombegrenzer 2 zugeordnet.

Im Kryostaten 1 bzw. in dessen Innenraum 3 ist ein Kryobad 4 aus - im dargestellten Ausführungsbeispiel - flüssigem Stickstoff vorhanden. Der Kryostat 1 kann doppelwandig ausgeführt sein und eine Vakuumisolation aufweisen.

Im Kryobad 4 des Kryostaten sind die eigentlichen Funktionselemente des supraleitenden Strombegrenzers 2 eingetaucht. Der das Kryobad 4 bildende flüssige Stickstoff hat eine Temperatur von ca. 77K bei ca. 1 bar.

Der supraleitende Strombegrenzer 2 ist über Stromdurchführungen 5, 6 an eine außerhalb des Kryostaten 1 angeordnete elektrische Leitung angeschlossen, die üblicherweise von Raumtemperatur umgeben ist.

Zur Kühlung des im Kryostaten 1 vorhandenen Kryobads 4 bzw. des dieses bildenden flüssigen Stickstoffs wird eine Kälteerzeugungsanlage bzw. ein Refrigerator 7 eingesetzt. Zum Refrigerator 7 gehört ein geschlossener Kühlkreislauf, wobei innerhalb des Kryostaten 1 verdampfter gasförmiger Stickstoff an einem Kondensator 30 eines Kaltkopfes 9 des Refrigeratoren 7 rekondensiert; hierdurch ist es nicht erforderlich, im Normalbetrieb Kältemittel in Form von flüssigem Stickstoff (LN2) nachzufüllen. Der Refrigerator 7 hat neben dem Kaltkopf 9 einen Heliumverdichter 10. Der Heliumverdichter 10 versorgt den Kaltkopf 9 durch einen Vor- und Rücklaufdruckleitungen aufweisenden Kreislauf 8 mit flüssigem Helium. Innerhalb des Kryostaten 1 wird verdampfter Stickstoff am Kondensator 30 des Kaltkopfes 9, der in den Kryostaten 1 hineinragt, rekondensiert. Die Kühlung des Heliumverdichters 10 erfolgt mittels eines Kühlwasserkreislaufs 11, dessen Kühlwasser beispielsweise von einem Zwischenkühlsystem eines Unterwasserschiffes zur Verfügung gestellt werden kann.

Wesentlich für die kapazitive Auslegung der Kälteleistung der Kälteerzeugungsanlage bzw. des Refrigerators 7 sind diejenigen Wärmemengen, die durch die beiden Stromdurchführungen 5, 6 in den Innenraum 3 des Kryostaten 1 eingebracht werden. Da der Temperaturunterschied zwischen der die elektrische Leitung bzw. Stromzuführung 5, 6 umgebenden Raumtemperatur und der Temperatur des flüssigen Stickstoffs im Kryobad 4 beträchtlich sind, können diese Wärmemengen sehr hoch sein.

Die Stromdurchführungen 5, 6 sind üblicherweise aus metallischen Werkstoffen hergestellt und haben somit sowohl eine gute elektrische als auch eine gute thermische Leitfähigkeit. Im Gegensatz zur guten elektrischen Leitfähigkeit ist die gute thermische Leitfähigkeit der Stromdurchführungen 5, 6 nachteilig für die Aufrechterhaltung des Niveaus des Kryobads 4, da der Wärmeeintrag zur Verdampfung des flüssigen Stickstoffs führt, der wieder verflüssigt werden muß. Weitere Wärme wird mittels der Stromdurchführungen 5, 6 bei Stromfluß wegen der endlichen elektrischen Leitfähigkeit der in den Stromdurchführungen 5, 6 vorgesehenen Leiter 12 und damit verbundener ohmscher Wärme erzeugt.

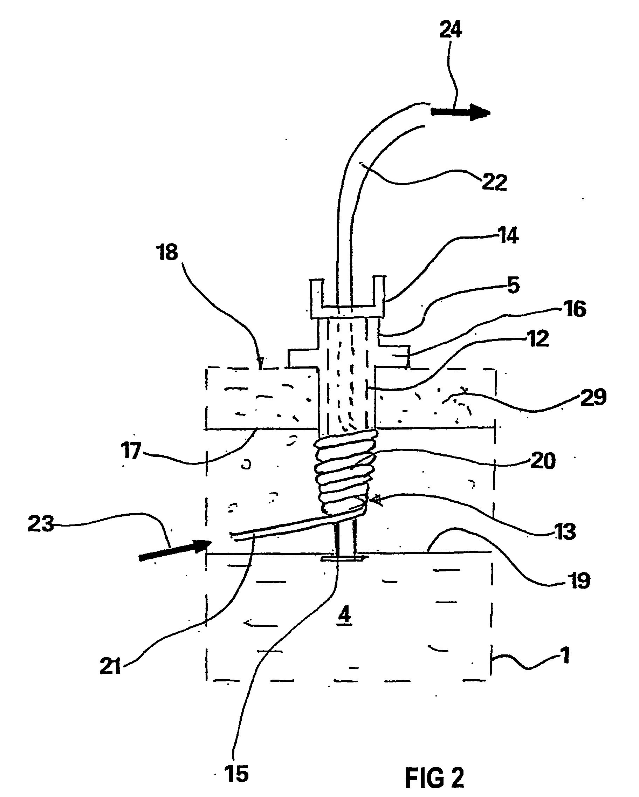

Um den Wärmeeintrag durch die Stromdurchführungen 5, 6 in das Kryobad 4 des Kryostaten 1 zu minimieren, ist jede Stromdurchführung 5, 6, wie sich aus FIGUR 2 ergibt, mit einer Wärmetauschvorrichtung 13 versehen. Die Stromdurchführung 5 wird vom Leiter 12 durchsetzt und hat ein äußeres Endterminal 14, welches von Raumtemperatur umgeben ist, sowie ein inneres Endterminal 15, welches von der kryogenischen Temperatur umgeben ist. Der Leiter 12 der Stromdurchführung 5 ist von einem Isolator 16 umgeben.

Die Stromdurchführung 5 hat einen außerhalb des Kryostaten 1 und einen in den Kryostaten 1 hineinragenden Abschnitt.

Der in den Kryostaten 1 hineinragende Abschnitt der Stromdurchführung 5 erstreckt sich von der Innenseite 17 des Kryostatdeckels 18 des Kryostaten bis zum Spiegel 19 des Kryobads 4, oberhalb dem im Kryostaten 1 ein mit gasförmigem Stickstoff gefüllter Raum sowie eine Isolierschicht 29 vorliegt.

Die Isolierschicht 29 des Kryostaten 1 ist beispielsweise aus einem thermischen Isolierwerkstoff, wie beispielsweise Styren-Schaum ausgebildet.

Bei der in FIGUR 2 gezeigten Ausführungsform liegt die Wärmetauschvorrichtung 13 in Form einer Rohrwendel 20 vor, die in unmittelbarer Kontaktanlage des Leiters 12 der Stromdurchführung 5 sich in Umfangsrichtung erstreckt und von der Isolierschicht 29 unterhalb des Kryostatdeckels 18 des Kryostaten bis in einen Bereich knapp oberhalb des Spiegels 19 des Kryobades 4 reicht. Am unteren Ende der Rohrwendel 20 ist diese über einen Kühlmittelzulauf 21 an eine Kühlmittelquelle angeschlossen. Der Kühlmittelzulauf 21 erstreckt sich vom dem Kryobad 4 zugewandten Ende der Rohrwendel 20 oberhalb des Spiegels 19 des Kryobads 4 durch den Kryostaten 1 und kann z.B. durch den Kryostatdeckel 18 hindurchgeführt werden.

Vom dem unteren Ende der Isolierschicht 29 unterhalb der Innenseite 17 des Kryostatdeckels 18 des Kryostaten 1 zugeordneten Ende der Rohrwendel 20 erstreckt sich ein Kühlmittelablauf 22 in äußerer Richtung durch die Stromdurchführung 5, durch den das Kühlmittel nach dem Durchlauf durch die Rohrwendel 20 abgeführt wird.

Das in die Rohrwendel 20 einlaufende Kühlmittel ist in den FIGUREN 2 bis 4 jeweils durch den Pfeil 23 gezeigt, während das aus der Rohrwendel 22 auslaufende Kühlmittel in den genannten FIGUREN jeweils durch den Pfeil 24 gezeigt ist.

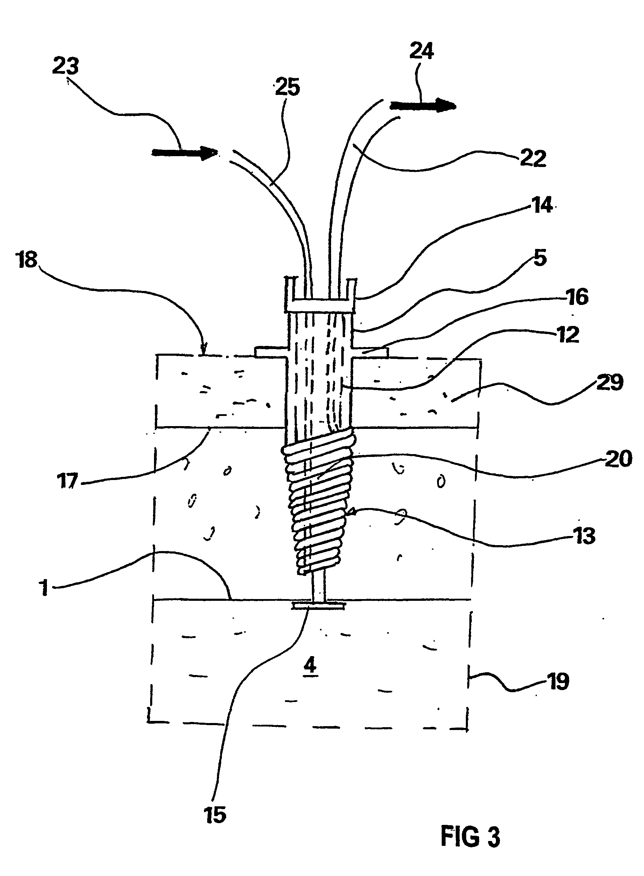

Die in FIGUR 3 gezeigte Ausführungform der die Wärmetauschvorrichtung 13 bildenden Rohrwendel 20 unterscheidet sich von der vorstehend anhand von FIGUR 2 geschilderten dadurch, daß die Rohrwendel 20 einen Kühlmittelzulauf 25 aufweist, der durch die Stromzuführung 5 zum dem Kryobad zugewandten Ende der Rohrwendel 20 geführt ist. Bei der in FIGUR 3 gezeigten Ausführungsform müssen sowohl der Kühlmittelablauf 22 als auch der Kühlmittelzulauf 25 durch die Stromdurchführung 5 geführt werden.

Als in die die Wärmetauschvorrichtung 13 der Stromdurchführung 5 bildende Rohrwendel 20 eingeführtes Kühlmittel wird im dargestellten Ausführungsbeispiel Flüssigsauerstoff eingesetzt. Dieser Flüssigsauerstoff befindet sich beispielsweise in Flüssigsauerstofftanks zum Betrieb von Brennstoffzellenanlagen an Bord von Unterwasserschiffen. Der Flüssigsauerstoff hat eine Temperatur von 90,188K bei einem Druck von 1 bar. Das aus flüssigem Stickstoff bestehende Kryobad 4 hat eine Temperatur von ca. 77,3K bei einem Druck von ca. 1 bar.

Die Flüssigsauerstofftanks haben infolge ihrer thermischen Isolierung eine natürliche Verdampfungsrate. Durch die Entnahme von flüssigem oder gasförmigem Sauerstoff aus den Flüssigsauerstofftanks kann der Druck im Flüssigsauerstofftank im zulässigen Bereich gehalten werden. Beim Betrieb der Brennstoffzellenanlage muß der Flüssigsauerstoff verdampft und vorgewärmt werden.

Somit kann ein Teilstrom des der Brennstoffzellenanlage zuzuführenden Flüssigsauerstoffs zur Entwärmung der Stromdurchführungen 5, 6 des Kryostaten 1 eingesetzt werden und entsprechend durch den Kühlmittelzulauf 21 bzw. den Kühlmittelzulauf 25 der Rohrwendel 20 zugeführt werden.

Je höher der erforderliche Strombedarf beim Betrieb der Brennstoffzellenanlage ist, desto mehr Strom fließt durch die Stromzuführungen 5, 6 des Kryostaten 1; desto mehr Flüssigsauerstoff muß jedoch auch verbrannt werden. Das heißt, der Massenstrom an Flüssigsauerstoff steigt genauso wie die in den Stromdurchführungen 5, 6 abzuführenden Verluste. Mit Nutzung der Wärmeabfuhr durch den flüssig in die Rohrwendel 20 eintretenden 23 bzw. gasförmig aus der Rohrwendel 20 austretenden 23 Sauerstoff kann der Refrigerator 7 bzw. die Kälteerzeugungsanlage des Kryostaten 1 bedeutend kleiner ausgelegt werden, mit geringerer Leistung betrieben und zeitweise ausgeschaltet werden, wordurch der Elektroenergiekonsum und der Kühlwasserbedarf reduziert wird.

Der Flüssigsauerstoff 23 wird im geschlossenen Kryostaten 1 durch die Rohrwendel 20 geleitet. Wie vorstehend beschrieben, hat die Rohrwendel 20 einen guten thermischen Kontakt mit dem Leiter 12 der Stromdurchführung 5. Der Flüssigsauerstoff wird innerhalb der Rohrwendel 20 erhitzt. Es erfolgt ein Wärmeübergang an ein einphasiges Kühlmittel mit folgender Verdampfungskühlung mit Phasenumwandlung. Der danach gasförmige Sauerstoff wird im Kühlmittelablauf 22 durch die Stromdurchführung 5 nach außen geleitet. Die Strömung des gasförmigen Sauerstoffs im Kühlmittelablauf 22 kann z.B. durch einen in der Brennstoffzellenanlage des Unterwasserschiffs vorhandenen Gaskompressor bewerkstelligt werden.

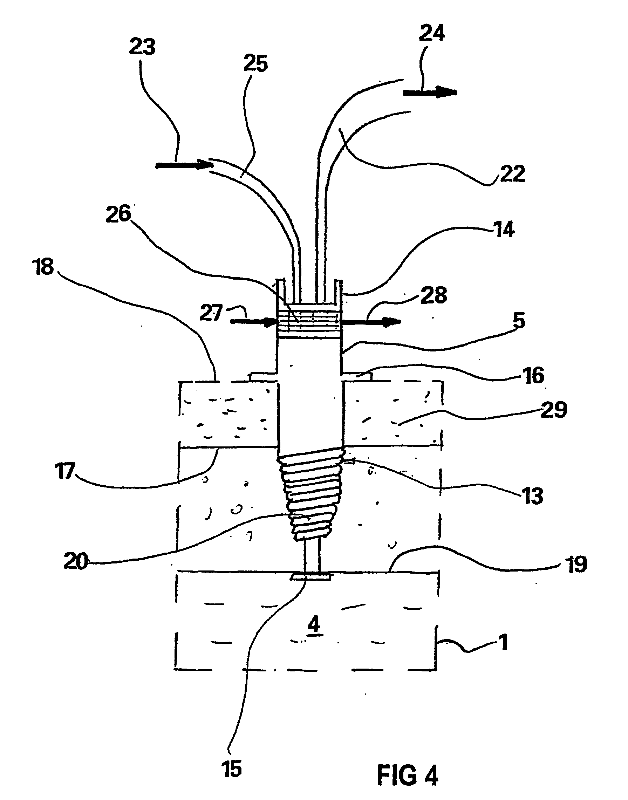

Eine in FIGUR 4 gezeigte Wärmetauschvorrichtung 13 hat neben der Rohrwendel 20 einen zusätzlichen Wasserwärmetauscher 26, der mit Kühlwasser 27 versorgt wird und Warmwasser 28 abgibt. Der Wasserwärmetauscher bzw. Wasserkühler 26 ist am äußeren Endterminal 14 der Stromdurchführung 5 angebracht. Er hat die Aufgabe, die Temperatur an der äußeren Leitung bzw. Sammelschiene von bis zu 80 Grad C bei Vollast zu verringern und bei Leerlauf - kein Strom - höchstens so zu erwärmen, daß keine Kondensation mit Vereisung auftritt. Hierdurch kann der als Kühlmittel der Rohrwendel 20 eingesetzte Flüssigsauerstoff besser ausgenutzt und ein kleinerer Temperaturgradient über die Länge der Stromdurchführung 5 erreicht werden.

Die Rohrwendel 20 ist innerhalb des Kryostaten 1 oberhalb des Spiegels 19 des Kryobads 4 in dem dort ausgebildeten Gasraum des Kryostaten 1 angeordnet; sie befindet sich keinesfalls innerhalb des aus flüssigem Stickstoff bestehenden Kryobads 4, weil die Temperatur des Flüssigsauerstoffs oberhalb des Siedepunkts von flüssigem Stickstoff liegt.

Da der Wärmeeintrag in das Kryobad hauptsächlich an dem Punkt erfolgt, an dem die Stromzuführung 5 in das Kryobad 4 aus flüssigem Stickstoff eintaucht, ist der kalte Flüssigsauerstoff möglichst nahe des inneren Endterminals 15 der Stromdurchführung 5 an deren Leiter 12 heranzuführen.

Weiterer Wärmeeintrag in das Kryobad 4 des Kryostaten erfolgt u.a. durch Konvektion im Gasraum des Kryostaten 1 an der Stromdurchführung 5 und sich daraus ergebende Erwärmung des gasförmigen Stickstoffs. Diese Konvektion kann ebenfalls verringert werden, wenn die Temperaturdifferenz dadurch reduziert wird, daß die Rohrwendel 20 dort an der Stromdurchführung 5 angebracht ist.

Da der Flüssigsauerstoff nur durch die Stromdurchführung 5 bzw. die Rohrwendel 20 und deren Kühlmittelzulauf 21 bzw. 25 und Kühlmittelablauf 22 geleitet wird, besteht kein direkter Kontakt zwischen dem Flüssigsauerstoff und der Apparatur des Kryostaten 1. Die mechanischen Schnittstellen können auf das Geringfügigste reduziert werden. Ein Sauerstoffverbrauch durch die Apparatur des Kryostaten 1 findet nicht statt.

Anstelle der Rohrwendel 20 kann auch ein anders gestalteter Wärmetauscher vorgesehen sein, wobei jedoch gesichert werden muß, daß eine genügend große Wärmetauscherfläche zur Verfügung steht.

Anstelle des Wasserwärmetauschers 26 kann am außerhalb des Kryostaten 1 angeordneten Abschnitt der Stromdurchführung 5 ein Wärmetauscher mit kryogener Flüssigkeit vorgesehen sein. In diesem Fall sind jedoch besondere Maßnahmen gegen Vereisung zu treffen, z.B. die Evakuierung der Stromdurchführung 5 von außen.

Es sei darauf hingewiesen, daß vorstehend die Wärmetauschvorrichtung 13 im Zusammenhang mit der Stromdurchführung 5 beschrieben wurde. Dies geschah jedoch lediglich beispielhaft, da eine derartige Wärmetauschvorrichtung 13 an jeder Stromdurchführung des Kryostaten 1 vorgesehen sein kann bzw. ist.

Durch die Anordnung der vorstehend beschriebenen Wärmetauschvorrichtung 13 an den Stromdurchführungen 5, 6 des Kryostaten 1 kann eine erhebliche Reduzierung des Wärmeeintrags in den Kryostaten 1 erzielt werden, wie sich aus folgendem ergibt:

Eine übliche Stromdurchführung für 3000A hat beispielsweise Verluste von 50W/kA. Für die hinleitende Stromdurchführung 5 und die rückleitende Stromdurchführung 6 betragen damit die Gesamtverluste ca. 300W. Diese Leistung soll abgeführt werden. Die Temperatur des Flüssigsauerstoffs beträgt ca. 90K, die durchschnittliche Temperatur über die Länge des Leiters 12 der Stromdurchführungen 5, 6 beträgt 220K. Es wird je Stunde eine maximale Menge von ca. 5kg Flüssigsauerstoff benötigt, d.h. je Stromdurchführung 5, 6 2,5kg/h. Die benötigte Menge Flüssigsauerstoff ist lastabhängig und reduziert sich bei Teillast, d.h. geringerem Strom als Nennstrom durch die HTSL-Apparatur, z.B. den Strombegrenzer oder die elektrische Maschine.

Der Wärmestrom kann abgeführt werden, wenn z.B. eine Wärmetauscherfläche von 3m² je Stromdurchführung 5, 6 bei einem Wärmedurchgangswiderstand äquivalent zu 1mm dicken Kupfer realisiert wird. Die Wärmetauscherfläche verändert sich bei einem anderen Wärmedurchgangswiderstand. Der Wärmedurchgangswiderstand verändert sich örtlich mit der dort herrschenden Temperatur. Es wird ein Werkstoff benötigt, welcher einen besonders guten Wärmedurchgangswiderstand bei derjenigen Temperatur hat, bei welcher der größte Anteil an Wärmestrom abgeführt werden soll, also z.B. am Ort des Hauptwärmeeintrags in den Kryostaten 1, d.h. an der Stelle, an dem die Stromdurchführung 5, 6 in das aus flüssigem Stickstoff gebildete Kryobad 4 eintaucht. Deshalb muß der Temperaturkoeffizient des Werkstoffs beachtet werden.

Der Refrigerator 7 bzw. die Kälteerzeugungsanlage für das vorstehend geschilderte Ausführungsbeispiel müßte an sich eine gesamte Kälteleistung von ca. 340W haben, um sämtliche Verluste aus Stromdurchführungen 5, 6, Kryostatverlusten, inneren Kontaktverlusten usw. abzudecken. Lassen sich die an den Stromdurchführungen 5, 6 auftretenden Verluste wie im vorigen Beispiel von 300W anderweitig abführen, so reicht bereits eine Kälteerzeugungsanlage bzw. ein Refrigerator 7 mit einer Leistung, die deutlich unterhalb von 100W bei einer kryogenen Temperatur im 77K-Bereich liegt. Ein Beispiel für einen anderen Refrigerator bzw. eine andere Kälteerzeugungsanlage erfordert eine Dimensionierung von ca. 600W Kälteleistung bei einer kryogenen Temperatur von 77K, wobei der Anteil der Stromdurchführungen ca. 540W beträgt. Hier reicht dann ebenfalls ein Refrigerator 7 bzw. eine Kälteerzeugungsanlage mit einer Kälteleistung, die unterhalb von 100W bei einer kryogenen Temperatur von 77K liegt. Das bedeutet, daß eine standardisierte Kälteerzeugungsanlage bzw. ein standardisierter Refrigerator 7 für alle Unterwasserschiffe mit Brennstoffzellenanlagen eingesetzt werden kann, da die Stromdurchführungen 5, 6 immer die Hauptverlustbringer sind.

Als kryogene Flüssigkeiten kommen außer Flüssigsauerstoff noch flüssiger Wasserstoff und flüssiges Erdgas infrage, die für den Betrieb von Brennstoffzellenanlagen jetzt oder zukünftig eingesetzt werden könnten.

## Patentansprüche

1. Kryostat für elektrische Apparate wie supraleitende Strombegrenzer und elektrische Maschinen wie Transformatoren, Motoren, Generatoren und elektrische Magnete mit supraleitender Wicklung, in dessen Innenraum (3) ein Kältemittel mit niedriger, insbesondere kryogener Temperatur, z.B. von 77K, ein Kryobad (4) für supraleitende Strombegrenzer (2) und/oder supraleitende Wicklungen ausbildet und der Stromdurchführungen (5, 6) aufweist, mittels denen Strom von einem Niveau hoher Temperatur, z.B. Raumtemperatur, auf ein Niveau niedriger, insbesondere kryogener Temperatur, z.B. 77K, und umgekehrt leitbar ist, **dadurch gekennzeichnet, daß** einer, vorzugsweise jeder Stromdurchführung (5, 6) des Kryostaten (1) eine Wärmetauschvorrichtung (13) zugeordnet ist, mittels der der Eintrag von Wärmeenergie aus der Umgebung in den Innenraum (3) des Kryostaten (1) über die jeweilige Stromdurchführung (5, 6) reduzierbar ist.

2. Kryostat nach Anspruch 1, bei dem jede Wärmetauschvorrichtung (13) eine Rohrwendel (20) aufweist, die an der Stromdurchführung (5, 6) an deren in den Innenraum (3) des Kryostaten (1) vorstehenden Abschnitt angeordnet ist, der sich zwischen einem Spiegel (19) des Kryobades (4) und einer Isolierschicht (29) bzw. einem Kryostatdeckel (18) befindet .

3. Kryostat nach Anspruch 2, bei dem die Rohrwendel (20) den in den Innenraum (3) des Kryostaten (1) vorstehenden Abschnitt der Stromdurchführung (5, 6) in dessen Umfangsrichtung in unmittelbarer Anlage umgibt, so daß ein guter thermischer Kontakt mit einem Leiter (12) der Stromdurchführung (5, 6) vorliegt.

4. Kryostat nach Anspruch 2 oder 3, bei dem sich die Rohrwendel (20) jeder Wärmetauschvorrichtung (13) am in den Innenraum (3) des Kryostaten (1) vorstehenden Abschnitt der Stromdurchführung (5, 6) von der Innenseite (17) des Kryostatdeckels (18) des Kryostaten (1) bzw. von der Unterseite der Isolierschicht (29) bis kurz oberhalb des Spiegels (19) des Kryobades (4) erstreckt.

5. Kryostat nach einem der Ansprüche 2 bis 4, bei dem ein Kühlmittelzulauf (21) der Rohrwendel (20) der Wärmetauschvorrichtung (13) zum dem Kryobad (4) zugewandten Ende der Rohrwendel (20) oberhalb des Spiegels (19) des Kryobades (4) seitlich in den Kryostaten (1) oder durch den Kryostatdeckel (18) in den Kryostaten (1) hineingeführt ist.

6. Kryostat nach einem der Ansprüche 2 bis 4, bei dem ein Kühlmittelzulauf (25) der Rohrwendel (20) der Wärmetauschvorrichtung (13) zum dem Kryobad (4) zugewandten Ende der Rohrwendel (20) durch die Stromdurchführung (5, 6) geführt ist.

7. Kryostat nach einem der Ansprüche 2 bis 6, bei dem ein Kühlmittelablauf (22) der Rohrwendel (20) der Wärmetauschvorrichtung (13) vom dem Kryobad (4) abgewandten Ende der Rohrwendel (20) durch die Stromdurchführung (5, 6) geführt ist.

8. Kryostat nach einem der Ansprüche 2 bis 7, bei dem als Kühlmittel (23) für die Rohrwendel (20) der Wärmetauschvorrichtung (13) Flüssigsauerstoff, Flüssigwasserstoff oder Füssigerdgas eingesetzt wird.

9. Kryostat nach Anspruch 8, der an Bord von Unterwasserschiffen eingesetzt wird und bei dem der als Kühlmittel (23) für die Rohrwendel (20) der Wärmetauschvorrichtung (13) eingesetzte Flüssigsauerstoff aus an Bord des Unterwasserschiffes zum Betrieb von Brennstoffzellenanlagen vorhandenen Flüssigsauerstofftanks entnommen wird.

10. Kryostat nach Anspruch 9, bei dem der als Kühlmittel (23) für die Rohrwendel (20) der Wärmetauschvorrichtung (13) eingesetzte Flüssigsauerstoff einen Sauerstoffteilstrom des der Brennstoffzellenanlage des Unterwasserschiffs verdampf und vorgewärmt zuzuführenden Sauerstoffs bildet.

11. Kryostat nach Anspruch 10, bei dem der die Rohrwendel (20) der Wärmetauschvorrichtung (13) verlassende gasförmige Sauerstoff mittels eines Gaskompressors der Brennstoffzellenanlage des Unterwasserschiffs ansaugbar ist.

12. Kryostat nach einem der Ansprüche 1 bis 11, bei dem die Wärmetauschvorrichtung (13) der Stromdurchführung (5, 6) einen am außerhalb des Kryostaten (1) angeordneten Abschnitt der Stromdurchführung (5, 6) angeordneten Wärmetauscher (26) aufweist.

13. Kryostat nach Anspruch 12, bei dem der außerhalb des Kryostaten (1) angeordnete Wärmetauscher (26) als Wasserwärmetauscher ausgebildet ist.

14. Kryostat nach Anspruch 12, bei dem der außerhalb des Kryostaten (1) angeordnete Wärmetauscher (26) als Wärmetauscher mit eine kryogenen Flüssigkeit ausgebildet ist.

15. Kryostat nach einem der Ansprüche 1 bis 14, bei dem zumindest zwei (5, 6), vorzugsweise alle vorhandenen Stromdurchführungen (5, 6) von einer Wärmetauschvorrichtung (13) umfaßt sind.

16. Kryostat nach einem der Ansprüche 12 bis 15, bei dem zumindest zwei (5, 6), vorzugsweise alle vorhandenen Stromdurchführungen (5, 6) von einem Wärmetauscher (26) umfaßt sind.

## Claims

1. Cryostat for electrical apparatuses such as superconducting current limiters and electrical machines such as transformers, motors, generators and electrical magnets with a superconducting winding, in whose interior (3) a coolant at a low, in particular cryogenic, temperature, for example 77K, forms a cryobath (4) for superconducting current limiters (2) and/or superconducting windings, and which has current bushings (5, 6), by means of which current can be passed from a high temperature level, for example room temperature, to a low, in particular cryogenic, temperature level, for example 77K, and vice versa, **characterized in that** one and preferably each current bushing (5, 6) of the cryostat (1) has an associated heat exchanging apparatus (13), by means of which the introduction of thermal energy from the environment into the interior (3) of the cryostat (1) via the respective current bushing (5, 6) can be reduced.

2. Cryostat according to Claim 1, in which each heat exchanging apparatus (13) has a tube coil (20), which is arranged on the section of the current bushing (5, 6) which projects into the interior (3) of the cryostat (1), with this being the section which is located between the level (19) of the cryobath (4) and an insulating layer (29) or a crystat cover (18).

3. Cryostat according to Claim 2, in which the tube coil (20) surrounds that section of the current bushing (5, 6) which projects into the interior (3) of the cryostat (1), in its circumferential direction and in direct contact, so that there is a good thermal contact with a conductor (12) of the current bushing (5, 6).

4. Cryostat according to Claim 2 or 3, in which the tube coil (20) of each heat exchanging apparatus (13) extends on that section of the current bushing (5, 6) which projects into the interior (3) of the cryostat (1) from the inside (17) of the cryostat cover (18) of the cryostat (1) or from the lower face of the insulating layer (29) to shortly above the level (19) of the cryobath (4).

5. Cryostat according to one of Claims 2 to 4, in which a coolant supply (21) for the tube coil (20) of the heat exchanging apparatus (13) is passed at the side into the cryostat (1) or through the cryostat cover (18) into the cryostat (1), above the level (19) of the cryobath (4), at the end of the tube coil (20) which faces the cryobath (4).

6. Cryostat according to one of Claims 2 to 4, in which a coolant supply (25) for the tube coil (20) of the heat exchanging apparatus (13) is passed through the current bushing (5, 6) at the end of the tube coil (20) facing the cryobath (4).

7. Cryostat according to one of Claims 2 to 6, in which a coolant outlet (22) from the tube coil (20) of the heat exchanging apparatus (13) is passed through the current bushing (5, 6) from that end of the tube coil (20) which faces away from the cryobath (4).

8. Cryostat according to one of Claims 2 to 7, in which liquid oxygen, liquid hydrogen or liquid natural gas is used as the coolant (23) for the tube coil (20) of the heat exchanging apparatus (13).

9. Cryostat according to Claim 8, which is used on board underwater vessels, and in which the liquid oxygen which is used as the coolant (23) for the tube coil (20) of the heat exchanging apparatus (13) is taken from liquid oxygen tanks which are provided on board the underwater vessel for operation of fuel cell systems.

10. Cryostat according to Claim 9, in which the liquid oxygen which is used as the coolant (23) for the tube coil (20) of the heat exchanging apparatus (13) forms an oxygen flow element of the oxygen which can be supplied in a vaporized and preheated form to the fuel cell system of the underwater vessel.

11. Cryostat according to Claim 10, in which the gaseous oxygen which leaves the tube coil (20) of the heat exchanging apparatus (13) can be sucked in by means of a gas compressor in the fuel cell system of the underwater vessel.

12. Cryostat according to one of Claims 1 to 11, in which the heat exchanging apparatus (13) for the current bushing (5, 6) has a heat exchanger (26) which is arranged on that section of the current bushing (5, 6) which is arranged outside the cryostat (1).

13. Cryostat according to Claim 12, in which the heat exchanger (26) which is arranged outside the cryostat (1) is in the form of a water heat exchanger.

14. Cryostat according to Claim 12, in which the heat exchanger (26) which is arranged outside the cryostat (1) is in the form of a heat exchanger with a cryogenic liquid.

15. cryostat according to one of Claims 1 to 14, in which at least two (5, 6) and preferably all of the current bushings (5, 6) which are present are surrounded by a heat exchanging apparatus (13).

16. Cryostat according to one of Claims 12 to 15, in which at least two (5, 6) and preferably all of the current bushings (5, 6) which are provided are surrounded by a heat exchanger (26).

## Revendications

1. Cryostat pour des appareils électriques comme des limiteurs de courant supraconducteurs et des machines électriques comme des transformateurs, des moteurs, des générateurs et des aimants électriques à enroulement supraconducteur, à l'intérieur (3) duquel est disposé un fluide frigorigène à température basse, notamment cryogénique, par exemple de 77 K, qui constitue un bain (4) cryogénique pour des limiteurs (2) de courant supraconducteurs et/ou des enroulements supraconducteurs et qui comporte des traversée (5, 6) de courant au moyen desquelles du courant peut passer d'un niveau à haute température, par exemple à la température ambiante, à un niveau à basse température, notamment cryogénique, par exemple de 77 K, et inversement, **caractérisé en ce qu'**à une et de préférence à chaque traversée (5, 6) de courant du cryostat (1) est associé un dispositif (13) d'échange de chaleur, au moyen duquel l'entrée d'énergie calorifique de l'extérieur à l'intérieur (3) du cryostat (1) par la traversée (5, 6) de courant respective peut être réduite.

2. Cryostat suivant la revendication 1, dans lequel chaque dispositif (13) échangeur de chaleur comporte un serpentin (20) qui est disposé sur la traversée (5,6) de courant sur sa partie entre un niveau (19) du bain (4) cryogénique et une couche (29) isolante ou un couvercle (18) du cryostat.

3. Cryostat suivant la revendication 2, dans lequel le serpentin (20) entoure la partie de la traversée (5, 6) de courant qui fait saillie à l'intérieur (3) du cryostat en contact direct dans sa direction de pourtour de sorte qu'il y a un bon contact thermique avec un conducteur (12) de la traversée (5, 6) de courant.

4. Cryostat suivant la revendication 2 ou 3, dans lequel le serpentin (20) de chaque dispositif (13) d'échange de chaleur s'étend sur la partie de la traversée (5, 6) de courant faisant saillie à l'intérieur (3) du cryostat (1), de la face (17) intérieure de couvercle (18) du cryostat (1) ou de la face intérieure de la couche (29) isolante jusqu'à peu au-dessus du niveau (19) du bain (4) cryogénique.

5. Cryostat suivant l'une des revendications 2 à 4, dans lequel une entrée 21 du fluide frigorigène du serpentin (20) du dispositif (13) de l'échangeur de chaleur à l'extrémité, tournée vers le bain (4) cryogénique, du serpentin (20) est introduite au-dessus du niveau (19) du bain (4) cryogénique latéralement dans le bain (4) cryogénique ou à travers le couvercle (18) du cryostat dans le cryostat (1).

6. Cryostat suivant l'une des revendications 2 à 4, dans lequel une entrée (25) de fluide frigorigène du serpentin (20) de l'échangeur (13) de chaleur peut aller vers l'extrémité, tournée vers le bain (4) cryogénique, du serpentin (20) en passant par la traversée (5, 6) de courant.

7. Cryostat suivant l'une des revendications 2 à 6, dans lequel une sortie (22) de fluide frigorigène du serpentin (20) de l'échangeur (13) de chaleur peut aller vers l'extrémité, éloignée du bain (4) cryogénique, du serpentin (20) en passant par la traversée (5, 6) de courant.

8. Cryostat suivant l'une des revendications 2 à 7, dans lequel on utilise comme fluide (23) frigorigène pour le serpentin (20) du dispositif (13) d'échangeur de chaleur de l'oxygène liquide, de l'hydrogène liquide ou du gaz naturel liquide.

9. Cryostat suivant la revendication 8, qui est utilisé à bord d'un sous-marin et dans lequel l'oxygène liquide utilisé comme fluide (23) frigorigène pour le serpentin (20) du dispositif (13) d'échange de chaleur est prélevé de la cuve d'oxygène liquide présente à bord du sous-marin pour faire fonctionner des installations de piles à combustible.

10. Cryostat suivant la revendication 9, dans lequel l'oxygène liquide utilisé comme fluide (23) frigorigène pour le serpentin (20) du dispositif (13) d'échange de chaleur forme un courant partiel de l'oxygène à envoyer évaporé et préchauffé à l'installation de piles à combustible du sous-marin.

11. Cryostat suivant la revendication 10, dans lequel l'oxygène gazeux quittant le serpentin (20) du dispositif (13) d'échange de chaleur peut être aspiré au moyen d'un compresseur à gaz de l'installation de piles à combustible du sous-marin.

12. Cryostat suivant l'une des revendications 1 à 11, dans lequel le dispositif (13) d'échange de chaleur de la traversée (5, 6) de courant a un autre échangeur de chaleur (26) disposé sur la partie de la traversée de courant se trouvant à l'extérieur du cryostat.

13. Cryostat suivant la revendication 12, dans lequel l'échangeur de chaleur (26) disposé à l'extérieur du cryostat (1) est constitué en échangeur de chaleur à eau.

14. Cryostat suivant la revendication 12, dans lequel l'échangeur de chaleur (26) disposé à l'extérieur du cryostat (1) est constitué en échangeur de chaleur ayant un liquide cryogénique.

15. Cryostat suivant l'une des revendications 1 à 14, dans lequel au moins deux (5, 6), de préférence toutes les traversées (5, 6) de courant présentes sont entourées d'un dispositif (13) échangeur de chaleur.

16. Cryostat suivant l'une des revendications 12 à 15, dans lequel au moins deux (5, 6), de préférence toutes les traversées (5, 6) de courant présentes sont entourées d'un échangeur (26) de chaleur.
